(19) Europäisches Patentamt
European Patent Office
Office européen des brevets

(11) **EP 4 726 795 A1**

(12) **EUROPEAN PATENT APPLICATION**

(43) Date of publication:
**15.04.2026 Bulletin 2026/16**

(21) Application number: **25206962.0**

(22) Date of filing: **06.10.2025**

(51) International Patent Classification (IPC):
*H01M 4/04* (2006.01)    *H01M 4/131* (2010.01)
*H01M 4/36* (2006.01)    *H01M 4/525* (2010.01)
*H01M 4/58* (2010.01)    *H01M 4/62* (2006.01)
*H01M 10/0525* (2010.01)

(52) Cooperative Patent Classification (CPC):
**H01M 4/366; H01M 4/04; H01M 4/131;**
**H01M 4/525; H01M 4/5825; H01M 4/625;**
**H01M 10/0525;** H01M 2004/021

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **08.10.2024 KR 20240136586**

(71) Applicant: **SAMSUNG SDI CO., LTD.**
**Yongin-si, Gyeonggi-do 17084 (KR)**

(72) Inventor: **KIM, JinYoung**
**17084 Yongin-si (KR)**

(74) Representative: **Marks & Clerk LLP**
**15 Fetter Lane**
**London EC4A 1BW (GB)**

(54) **POSITIVE ELECTRODE ACTIVE MATERIAL FOR RECHARGEABLE LITHIUM BATTERY, PREPARING METHOD THEREOF AND RECHARGEABLE LITHIUM BATTERY INCLUDING THE SAME**

(57)    A method for preparing a positive electrode active material includes: (1) pulverizing a carbon-based raw material to prepare carbon-based fine powder having an average particle diameter of about 10 nm to about 100 nm, (2) mixing a lithium metal composite oxide and the carbon-based fine powder to prepare a mixed powder, and (3) applying rotation of about 1,000 rpm to about 6,000 rpm for about 2 minutes to about 10 minutes to the mixed powder to form or provide a carbon-based coating layer on a particle surface of the lithium metal composite oxide Also disclosed are a positive electrode active material and a rechargeable lithium battery including the positive electrode active material.

FIG. 10

Particle Strength (MPa)

*bare*: 140.88125    *Comparative Example 1*: 139.12525    *Example 1*: 179.213    *Example 2*: 165.6398182

EP 4 726 795 A1

**Description**

**BACKGROUND**

**1. Field**

The present invention relates to a positive electrode active material, a method for preparing the positive electrode active material, and a rechargeable lithium battery including the positive electrode active material.

**2. Description of the Related Art**

With the rapid spread of electronic devices, such as mobile phones and/or laptop computers, and/or electric vehicles that use batters, it is desirable to develop rechargeable batteries having high energy density and high capacity (e.g., electrical capacity). Accordingly, research and development to improve or enhance the performance of rechargeable lithium batteries is actively being conducted.

A rechargeable lithium battery is a battery including a positive electrode and a negative electrode containing active materials capable of intercalation and deintercalation of lithium ions, and an electrolyte, and produces electrical energy through the oxidation and reduction reactions while lithium ions are intercalated into and deintercalated from the positive electrode and the negative electrode.

**SUMMARY**

One or more aspects of the present invention are directed toward a positive electrode active material having improved or enhanced flowability by including a carbon-based coating layer on the surface of the positive electrode active material, and a battery (e.g., a rechargeable lithium battery) including the positive electrode active material.

One or more aspects of the present invention are directed toward a method for preparing a positive electrode active material in which a process of forming or providing a carbon-based coating layer is simplified.

Additional aspects of embodiments will be set forth in part in the description which follows and, in part, will be apparent from the description or may be learned by practice of the presented embodiments of the disclosure.

In a first aspect, the present invention provides a method for preparing a positive electrode active material, the method comprising: (1) pulverizing a carbon-based raw material to prepare carbon-based fine powder, (2) mixing a lithium metal composite oxide and the carbon-based fine powder to prepare a mixed powder, and (3) applying rotation to the mixed powder to form or provide a carbon-based coating layer on a particle surface of the lithium metal composite oxide. The average particle diameter of the carbon-based fine powder is about 10 nm to about 100 nm. The applying of the rotation comprises applying rotation of about 1,000 rpm to about 6,000 rpm for about 2 minutes to about 10 minutes.

In a second aspect, the present invention provides a positive electrode active material comprising a lithium metal composite oxide and a carbon-based coating layer on a surface of the lithium metal composite oxide, wherein: (i) an avalanche energy of the positive electrode active material is about 6 mJ/kg to about 13 mJ/kg, (ii) an avalanche angle of the positive electrode active material is about 20° to about 60°, and (iii) an average particle diameter of the positive electrode active material is about 0.5 $\mu$m to about 15 $\mu$m. The aforementioned positive electrode active material may be obtained directly by means of the method of the first aspect of the invention.

In a third aspect, the present invention provide a rechargeable lithium battery comprising: a positive electrode, including the aforementioned positive electrode active material, a negative electrode, including a negative electrode active material, and a separator between the negative electrode and the positive electrode.

At least some of the above and other features of the invention are set out in the claims.

**BRIEF DESCRIPTION OF THE DRAWINGS**

The accompanying drawings are included to provide a further understanding of embodiments of the subject matter of the present disclosure and are incorporated in and constitute a part of this specification. The drawings illustrate embodiments of the subject matter of the present disclosure and, together with the description, serve to explain principles of embodiments of the subject matter of the present disclosure.

FIG. 1 is a conceptual diagram schematically illustrating a rechargeable lithium battery according to one or more embodiments of the present disclosure.

FIGS. 2-5 are cross-sectional views schematically illustrating rechargeable lithium batteries according to one or more embodiments of the present disclosure, where FIG. 2 is a cylindrical battery, FIG 3 is a prismatic battery, and FIGS. 4 and 5 are pouch-type or kind batteries.

FIG. 6 is a flowchart illustrating a method for preparing a positive electrode active material according to one or more embodiments of the present disclosure.

FIGS. 7 and 8 are schematic diagrams illustrating one or more embodiments of a positive electrode active material prepared according to the preparing method of the present disclosure.

FIGS. 9A-9C are schematic diagrams illustrating a method for measuring avalanche parameters.

FIG. 10 is a graph of the measured results of particle strength for the Examples and Comparative Example of the present disclosure.

## DETAILED DESCRIPTION

In order to fully understand the aspects and features of the present disclosure, the subject matter of the present disclosure will be described below in more detail with reference to the accompanying drawings. The subject matter of the present disclosure may, however, be embodied in one or more forms and should not be construed as being limited to one or more embodiments set forth herein, and one or more changes and modifications can be made. Rather, these embodiments are provided as examples so that this disclosure will be thorough and complete and will fully convey the aspects and features of the present disclosure to those skilled in the art to which the present disclosure pertains.

The term "and/or" shall include the combination of a plurality of listed items or any of the plurality of listed items.

The use of "may" if (e.g., when) describing embodiments of the present disclosure refers to "one or more embodiments of the present disclosure."

As used herein, the terms "use," "using," and "used" may be considered synonymous with the terms "utilize," "utilizing," and "utilized," respectively.

Any numerical range recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, for example, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in the present disclosure is intended to include all higher numerical limitations subsumed therein.

As utilized herein, the term "about" or similar terms are used as terms of approximation and not as terms of degree and are intended to account for the inherent deviations in measured or calculated values that would be recognized by those of ordinary skill in the art. The term "about" or "approximately," as used herein, is also inclusive of the stated value and refers to within an acceptable range of deviation for the particular value as determined by one of ordinary skill in the art, considering the measurement in question and the error associated with measurement of the particular quantity (e.g., the limitations of the measurement system). For example, "about" may refer to within one or more standard deviations, or within $\pm30\%$, $\pm20\%$, $\pm10\%$, or $\pm5\%$ of the stated value.

In the present disclosure, it will be understood that, if (e.g., when) an element is referred to as being on another element, the element may be directly on the other element or intervening elements may be present between therebetween. In contrast, if (e.g., when) an element is referred to as being "directly on" another element, there are no intervening elements present therebetween.

In the drawings, thicknesses of one or more components may be exaggerated to effectively or suitably illustrate the technical contents. Like reference numerals refer to like elements throughout the specification.

Unless otherwise noted in the present disclosure, the expression of singular form may include the expression of plural form.

In one or more embodiments, unless otherwise noted, the phrase "A or B" may indicate "A but not B", "B but not A", and "A and B".

The terms "has/includes" and/or "having/including" used in this disclosure do not exclude the presence or addition of one or more other components. For example, it should be understood that the term "comprise(s)/comprising," "include(s)/including," or "have/has/having" specifies the presence of stated features, integers, steps, operations, elements, and/or components, but do not preclude the presence or addition of one or more other features, integers, steps, operations, elements, components, and/or groups thereof. Also, the terms "comprise(s)/comprising," "include(s)/including," "have/has/having," or similar terms include or support the terms "consisting of" and "consisting essentially of," indicating the presence of stated features, integers, steps, operations, elements, and/or components, without or essentially without the presence of other features, integers, steps, operations, elements, components, and/or groups thereof.

As used herein, the term "combination thereof" may refer to a mixture, a stack, a composite, a copolymer, an alloy, a blend, a reaction product, and/or the like of constituents.

Unless otherwise defined in the present disclosure, a particle diameter may be an average particle diameter. In one or more embodiments, a particle diameter indicates an average particle diameter ($D_{50}$) where a cumulative volume is about 50 volume % in a particle size distribution. The average particle diameter ($D_{50}$) may be measured by a method generally available to or generally used by those skilled in the art, for example, by a particle size analyzer and/or a transmission electron microscope (TEM) image and/or a scanning electron microscope (SEM) image. In one or more embodiments, a dynamic light-scattering measurement device is used to perform a data analysis, the number of particles is counted for each particle size range, and then from this data, an average particle diameter ($D_{50}$) value may be obtained through a calculation. In one or more embodiments, a laser scattering method may be utilized to measure the average particle diameter ($D_{50}$). In the laser scattering method, a target particle is distributed in a dispersion solvent, introduced into a laser scattering particle measurement device (e.g., MT3000 commercially available from Microtrac, Inc), irradiated with ultrasonic waves of 28 kHz at a power of 60 W, and then an average particle diameter ($D_{50}$) is calculated in the 50% standard of particle diameter distribution in the measurement device.

In the present disclosure, unless otherwise separately defined, the term "substituted" may refer to that at least one hydrogen of a substituent or a compound is substituted by deuterium, a halogen group, a hydroxyl group, an amino group, a C1 to C30 amine group, a nitro group, a C1 to C40 silyl group, a C1 to C30 alkyl group, a C1 to C10 alkylsilyl group, a C6 to C30 arylsilyl group, a C3 to C30 cycloalkyl group, a C3 to C30 heterocycloalkyl group, a C6 to C30 aryl group, a C2 to C30 heteroaryl group, C1 to C20 alkoxy group, a C1 to C10 fluoroalkyl group, a cyano group, or a combination thereof.

For example, the term "substituted" may refer to that at least one hydrogen of a substituent or a compound is substituted by deuterium, a halogen group, a C1 to C30 alkyl group, a C1 to C10 alkylsilyl group, a C6 to C30 arylsilyl group, a C3 to C30 cycloalkyl group, a C3 to C30 heterocycloalkyl group, a C6 to C30 aryl group, a C2 to C30 heteroaryl group, a C1 to C10 fluoroalkyl group, or a cyano group. For example, the term "substituted" may refer to that at least one hydrogen of a substituent or a compound is substituted by deuterium, a halogen group, a C1 to C20 alkyl group, a C6 to C30 aryl group, a C1 to C10 fluoroalkyl group, or a cyano group. In one or more embodiments, the term "substituted" may refer to that at least one hydrogen of a substituent or a compound is substituted by deuterium, a halogen group, a C1 to C5 alkyl group, a C6 to C18 aryl group, a C1 to C5 fluoroalkyl group, or a cyano group. For example, the term "substituted" may refer to that at least one hydrogen of a substituent or a compound is substituted by deuterium, a cyano group, a halogen group, a methyl group, an ethyl group, a propyl group, a butyl group, a phenyl group, a biphenyl group, a terphenyl group, a trifluoromethyl group, or a naphthyl group.

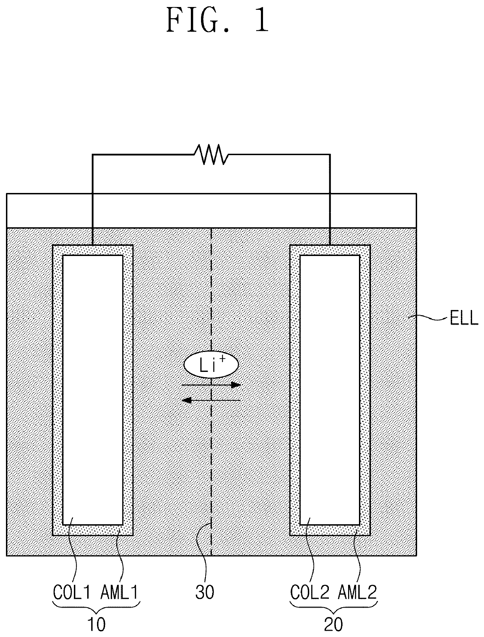

FIG. 1 is a simplified conceptual diagram illustrating a rechargeable lithium battery according to one or more embodiments of the present disclosure. Referring to FIG. 1, a rechargeable lithium battery may include a positive electrode 10, a negative electrode 20, a separator 30, and an electrolyte ELL.

The positive electrode 10 and the negative electrode 20 may be spaced and/or apart (e.g., spaced apart or separated) from each other across the separator 30. The separator 30 may be between the positive electrode 10 and the negative electrode 20. The positive electrode 10, the negative electrode 20, and the separator 30 may be in contact with the electrolyte ELL. The positive electrode 10, the negative electrode 20, and the separator 30 may be impregnated in/with the electrolyte ELL.

The electrolyte ELL may be a medium by which lithium ions are transferred between the positive electrode 10 and the negative electrode 20. In the electrolyte ELL, the lithium ions may move through the separator 30 toward one selected from the positive electrode 10 and the negative electrode 20.

**Positive Electrode 10**

The positive electrode 10 for a rechargeable lithium battery may include a current collector COL1 and a positive electrode active material layer AML1 on the current collector COL1. The positive electrode active material layer AML1 may include a positive electrode active material and further include a binder and/or a conductive (e.g., electrically conductive) material.

An amount of the positive electrode active material may be about 90 wt% to about 99.5 wt% relative to (e.g., based on) 100 wt% of the positive electrode active material layer AML1. An amount of each of the binder and the conductive material may be about 0.5 wt% to about 5 wt% relative to (e.g., based on) 100 wt% of the positive electrode active material layer AML1.

The binder may serve to improve or enhance attachment of negative electrode active material particles to each other and also to improve or enhance attachment of the negative electrode active material to the current collector COL2. The binder may include a non-aqueous (e.g., water-insoluble) binder, an aqueous (e.g., water-soluble) binder, a dry binder, or a combination thereof.

The non-aqueous binder may include polyvinyl chloride, carboxylated polyvinyl chloride, polyvinyl fluoride, an ethylene-propylene copolymer, polystyrene, polyurethane, polytetrafluoroethylene, polyvinylidene fluoride, polyethylene, polypropylene, polyamide imide, polyimide, or a combination thereof.

The aqueous binder may include a styrene-butadiene rubber, a (meth)acrylated styrene-butadiene rubber, a (meth)acrylonitrile-butadiene rubber, a (meth)acrylic rubber, a butyl rubber, a fluoro elastomer, polyethylene oxide, polyvinylpyrrolidone, polyepichlorohydrin, polyphosphazene, poly(meth)acrylonitrile, an ethylene-propylene-diene copolymer, polyvinylpyridine, chlorosulfonated polyethylene, latex, a polyester resin, a (meth)acrylic resin, a phenolic resin, an epoxy resin, polyvinyl alcohol, or a combination thereof.

If (e.g., when) an aqueous (e.g., water-soluble) binder is used as the negative electrode binder, a cellulose-based compound capable of providing viscosity (or increasing viscosity) may further be included. The cellulose-based compound may include one or more selected from among carboxymethyl cellulose, hydroxypropyl methylcellulose, methyl cellulose, and alkali metal salts thereof. The alkali metal may include sodium (Na), potassium (K), and/or lithium (Li).

The dry binder may include a fibrillizable polymer material, for example, polytetrafluoroethylene, polyvinylidene fluoride, a polyvinylidene fluoridehexafluoropropylene copolymer, polyethylene oxide, or a combination thereof.

The conductive material may be used to provide an electrode with conductivity (e.g., electrical conductivity), and any suitable conductive (e.g., electrically conductive) material that does not cause a chemical change in a battery (e.g., a rechargeable lithium battery) may be used as the conductive material. For example, the conductive material may include a carbon-based material, such as natural graphite, artificial graphite, carbon black, acetylene black, Ketjen black, carbon fiber, carbon nano-fiber, and/or carbon nano-tube; a metal powder and/or a metal fiber including one or more selected from among copper, nickel, aluminium, and silver; a conductive (e.g., electrically conductive) polymer, such as polyphenylene and/or a polyphenylene derivative; or a mixture thereof.

The current collector COL2 may include a copper foil, a nickel foil, a stainless-steel foil, a titanium foil, a nickel foam, a copper foam, a polymer substrate coated with a conductive (e.g., electrically conductive) metal, or a combination thereof.

**Negative Electrode Active Material**

The negative electrode active material in the negative electrode active material layer AML2 may include a material that may reversibly intercalate and deintercalate lithium ions, lithium metal, a lithium metal alloy, a material that may dope and de-dope lithium, and/or transition metal oxide.

The material that may reversibly intercalate and deintercalate lithium ions may include a carbon-based negative electrode active material, for example, crystalline carbon, amorphous (e.g., non-crystalline) carbon, or a combination thereof. For example, the crystalline carbon may include graphite, such as non-shaped, sheet-shaped (e.g., substantially sheet-shaped), flake-shaped (e.g., substantially flake-shaped), sphere-shaped (e.g., substantially sphere-shaped), or fiber-shaped (e.g., substantially fiber-shaped) natural graphite and/or artificial graphite, and the amorphous carbon may include soft carbon, hard carbon, mesophase pitch carbon, and/or calcined coke.

The lithium metal alloy may include an alloy of lithium and metal that is selected from among Na, K, rubidium (Rb), cesium (Cs), francium (Fr), beryllium (Be), Mg, calcium (Ca), Sr, silicon (Si), antimony (Sb), lead (Pb), indium (In), zinc (Zn), barium (Ba), radium (Ra), germanium (Ge), Al, and tin (Sn).

The material that may dope and de-dope lithium may include a Si-based negative electrode active material and/or a Sn-based negative electrode active material. The Si-based negative electrode active material may include silicon, silicon-carbon composite, $SiO_x$ (where $0 < x \leq 2$; e.g., $SiO_2$), Si-Q alloy (where Q is alkali metal, alkaline earth metal, Group 13 element, Group 14 element (except for Si), Group 15 element, Group 16 element, transition metal, a rare-earth element, or a combination thereof), or a combination thereof. The Sn-based negative electrode active material may include Sn, $SnO_k$ (where $0 < k \leq 2$) (e.g., $SnO_2$), a Sn-based alloy, a combination thereof.

The silicon-carbon composite may be a composite of silicon and amorphous (e.g., non-crystalline) carbon. According to one or more embodiments, the silicon-carbon composite may have a structure in which the amorphous carbon is coated on a surface of the silicon particle. For example, the silicon-carbon composite may include a secondary particle (core) in which primary silicon particles are assembled, and an amorphous (e.g., non-crystalline) carbon coating layer (shell) on a surface of the secondary particle. The amorphous carbon may also be between the primary silicon particles, and for example, the primary silicon particles may be coated with the amorphous carbon. The secondary particles may be present dispersed in an amorphous (e.g., non-crystalline) carbon matrix.

The silicon-carbon composite may further include crystalline carbon. For example, the silicon-carbon composite may include a core including crystalline carbon and silicon particles and may also include an amorphous (e.g., non-crystalline) carbon coating layer on a surface of the core.

The Si-based negative electrode active material and/or the Sn-based negative electrode active material may be used in combination with a carbon-based negative electrode active material.

**Separator 30**

Based on the type or kind of the rechargeable lithium battery, the separator 30 may be between the positive electrode 10 and the negative electrode 20. The separator 30 may include one or more selected from among polyethylene, polypropylene, and polyvinylidene fluoride and may have a multi-layered separator thereof, such as a polyethylene/polypropylene bi-layered separator, a polyethylene/polypropylene/polyethylene tri-layered separator, and a polypropylene/polyethylene/polypropylene tri-layered separator.

The separator 30 may include a porous substrate and a coating layer on one surface or two opposite surfaces of the porous substrate, which coating layer includes an organic material, an inorganic material, or a combination thereof.

The porous substrate may be a polymer layer including one selected from among polyolefin, such as polyethylene and/or polypropylene, polyester, such as polyethylene terephthalate and/or polybutylene terephthalate, polyacetal, polyamide, polyimide, polycarbonate, polyetherketone, polyaryletherketone, polyetherimide, polyamideimide, polybenzimidazole, polyethersulfone, polyphenyleneoxide, a cyclic olefin copolymer, polyphenylenesulphide, polyethylene naphthalate, glass fiber, and/or polytetrafluoroethylene (PTFE; e.g., Teflon™), or may be a copolymer or mixture including two or more selected from among the materials as described herein.

The organic material may include a polyvinylidenefluoride-based copolymer and/or a (meth)acrylic copolymer.

The inorganic material may include an inorganic particle selected from $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, boehmite, or a combination thereof, but embodiments of the present disclosure are not limited thereto.

The organic material and the inorganic material may be present mixed in one coating layer or may be present as a stack of a coating layer including the organic material and a coating layer including an inorganic material.

## Electrolyte ELL

The electrolyte ELL for a rechargeable lithium battery may include a non-aqueous (e.g., water-insoluble) organic solvent and a lithium salt.

The non-aqueous organic solvent may serve as a medium to transmit ions that participate in an electrochemical reaction of the battery (e.g., the rechargeable lithium battery).

The non-aqueous organic solvent may include a carbonate-based solvent, an ester-based solvent, an ether-based solvent, a ketone-based solvent, an alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), and/or butylene carbonate (BC).

The ester-based solvent may include methyl acetate, ethyl acetate, n-propyl acetate, dimethyl acetate, methyl propionate, ethyl propionate, decanolide, mevalonolactone, valerolactone, caprolactone, and/or propyl propionate (PP).

The ether-based solvent may include dibutyl ether, tetraethylene glycol dimethyl ether (tetraglyme), bis(2-methoxyethyl) ether (diglyme), dimethoxyethane, 2-methyltetrahydrofuran, 2,5-dimethyltetrahydrofuran, and/or tetrahydrofuran. The ketone-based solvent may include cyclohexanone. The alcohol-based solvent may include ethyl alcohol and/or isopropyl alcohol. The aprotic solvent may include nitriles, such as R-CN (where R is a hydrocarbon group having a C2 to C20 linear, branched, or cyclic structure and may include a double bond, an aromatic ring, and/or an ether group); amides, such as dimethylformamide; dioxolanes, such as 1,3-dioxolane and/or 1.4-dioxolane; and/or sulfolanes.

The non-aqueous organic solvent may be used alone or in a mixture of two or more substances.

In one or more embodiments, if (e.g., when) a carbonate-based solvent is used, a cyclic carbonate and a chain carbonate may be mixed and used, and the cyclic carbonate and the chain carbonate may be mixed in a volume ratio of about 1:1 to about 1:9.

The lithium salt may be a material that is dissolved in the non-aqueous organic solvent to serve as a supply source of lithium ions in a battery (e.g., a rechargeable lithium battery) and plays a role in enabling a basic operation of a rechargeable lithium battery and in promoting or enhancing the movement of lithium ions between the positive electrode and the negative electrode. The lithium salt may include, for example, at least one selected from among $LiPF_6$, $LiBF_4$, $LiSbF_6$, $LiAsF_6$, $LiClO_4$, $LiAlO_2$, $LiAlCl_4$, $LiPO_2F_2$, LiCl, Lil, $LiN(SO_3C_2F_5)_2$, $Li(FSO_2)_2N$ (lithium bis(fluorosulfonyl)imide, LiFSI), $LiC_4F_9SO_3$, $LiN(C_xF_{2x+1}SO_2)(C_yF_{2y+1}SO_2)$ (where x and y are integers of 1 to 20), lithium trifluoromethane sulfonate, lithium tetrafluoroethanesulfonate, lithium difluoro(oxalato)borate (LiDFOB), lithium difluorobis(oxalato)phosphate (LiDFBOP), and lithium bis(oxalato)borate (LiBOB).

## Rechargeable Lithium Battery

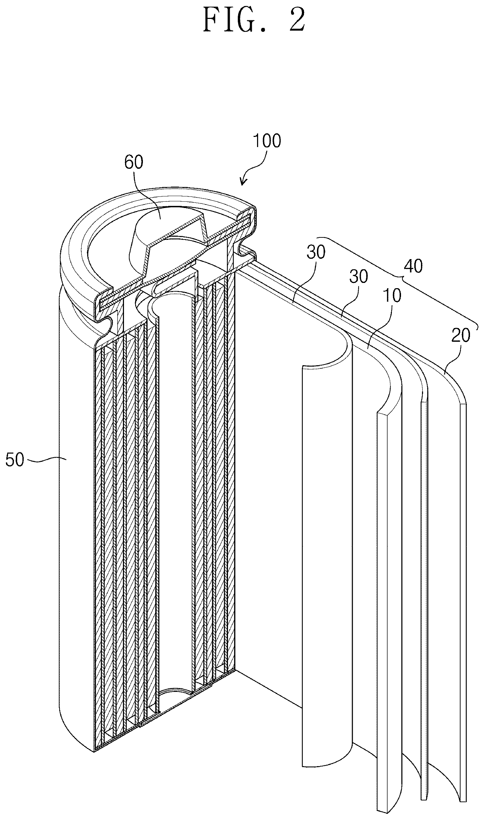

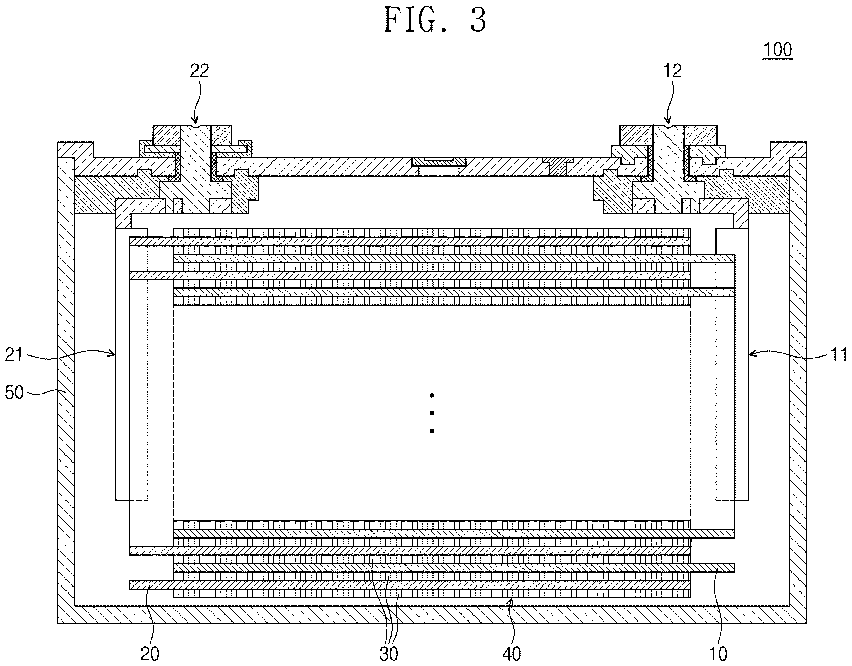

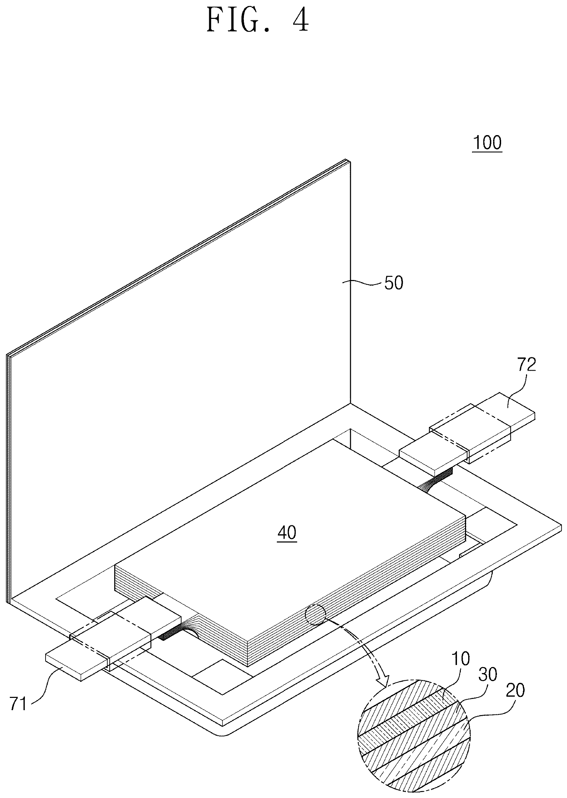

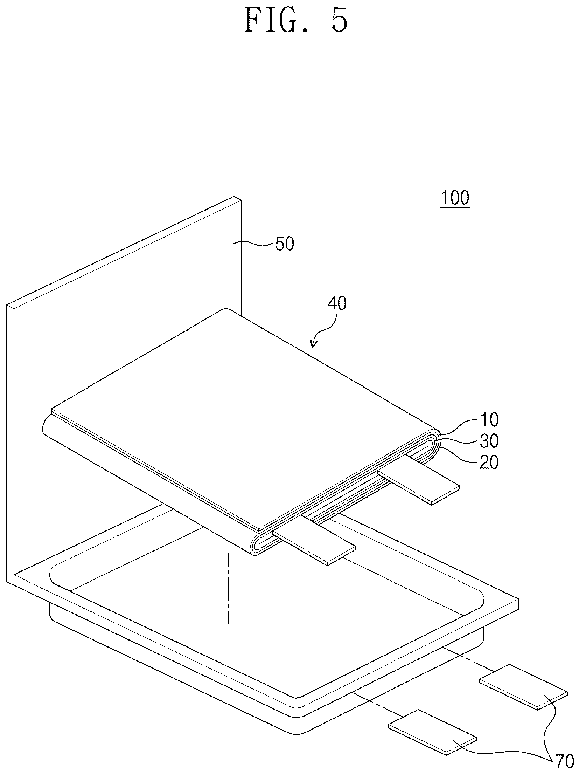

Based on a shape of a rechargeable lithium battery, the rechargeable lithium battery may be classified into cylindrical, prismatic, pouch, and coin types or kinds. FIGS. 2 to 5 are simplified diagrams illustrating a rechargeable lithium battery according to one or more embodiments, with FIG. 2 illustrating a cylindrical battery, FIG. 3 illustrating a prismatic battery, and FIGS. 4 and 5 illustrating pouch-type or kind batteries. Referring to FIGS. 2 to 4, a rechargeable lithium battery 100 may include an electrode assembly 40 in which a separator 30 is between a positive electrode 10 and a negative electrode 20, and may also include a casing 50 in which the electrode assembly 40 is accommodated. The positive electrode 10, the negative electrode 20, and the separator 30 may be impregnated in/with an electrolyte. The rechargeable lithium battery 100 may include a sealing member 60 that seals the casing 50 as illustrated in FIG. 2. In one or more embodiments, as illustrated in FIG. 3, the rechargeable lithium battery 100 may include a positive electrode lead tab 11, a positive electrode terminal 12, a negative electrode lead tab 21, and a negative electrode terminal 22. As illustrated in FIGS. 4 and 5, the rechargeable lithium battery 100 may include an electrode tab 70, or a positive electrode tab 71 and a negative electrode tab 72, which electrode tab 70 serves as an electrical path to externally induce a current generated in the electrode assembly 40.

**Method for Preparing Positive Electrode Active Material**

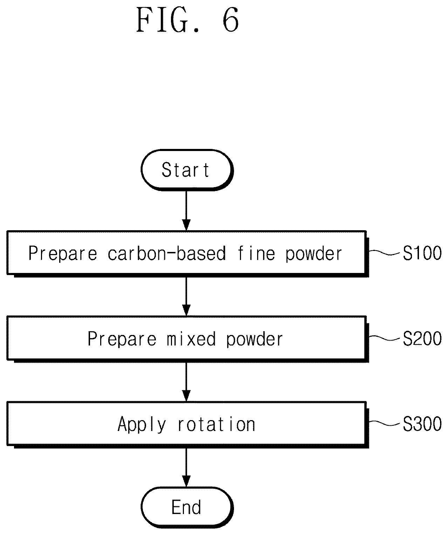

FIG. 6 is a flowchart illustrating a method for preparing a positive electrode active material according to one or more embodiments of the present disclosure. Referring to FIG. 6, a method for preparing a positive electrode active material according to the present disclosure will be described in more detail.

A method for preparing a positive electrode active material according to one or more embodiments of the present disclosure includes: (1) pulverizing a carbon-based raw material to prepare a carbon-based fine powder (S100), (2) mixing a lithium metal composite oxide and the carbon-based fine powder to prepare a mixed powder (S200), and (3) applying rotation to the mixed powder to form or provide a carbon-based coating layer on a particle surface of the lithium metal composite oxide (S300).

A carbon-based raw material is pulverized to prepare a carbon-based fine powder (S100). The carbon-based raw material may be at least one selected from the group consisting of graphite, carbon black, acetylene black, graphene, carbon nanotubes, and carbon nanofibers.

The pulverizing (e.g., the pulverizing of the carbon-based raw material) may include putting the carbon-based raw material into a pulverizer including balls and operating the pulverizer for about 60 minutes. For example, the operation of the pulverizer for about 60 minutes may be performed by operating the pulverizer for about 10 minutes each time, repeating the operation six times, with a rest period between each operation (e.g., between each of the six repetitions of the operating of the pulverizer). By providing the rest period, the balls may be prevented from being overheated and broken (or a degree to or occurrence of which the balls become overheated and broken may be reduced), and the carbon-based raw material may be pulverized to a more uniform size.

The mixing volume ratio of the carbon-based raw material to the balls in the container of the pulverizer may be about 2:1 to about 5:1, about 2:1 to about 4:1, or about 2:1 to about 3:1. The particle diameter of the balls may be about 1 mm to about 5 mm, about 1 mm to about 4 mm, or about 1 mm to about 3 mm. The rotation speed at which the pulverizer operates may be about 5,000 rpm to about 10,000 rpm, about 5,000 rpm to about 9,000 rpm, about 5,000 rpm to about 8,000 rpm, about 5,000 rpm to about 7,000 rpm, or about 5,000 rpm to about 6,000 rpm. Particularly advantageous conditions may be a mixing volume ratio of the carbon-based raw material to the balls in the container of the pulverizer of about 2:1, a particle diameter of the balls of about 2 mm, and a rotation speed at which the pulverizer operates of about 5,000 rpm. If (e.g., when) deviated from the range, the balls may be broken or the carbon-based raw material may not be pulverized to a size as small as a target (e.g., set or predetermined) size in the present disclosure.

The pulverizing may performed by any one pulverizer selected from the group consisting of a ball mill, a bead mill, a high energy ball mill, a planetary mill, a stirred ball mill, and a vibration mill.

The pulverizing process (e.g., the pulverizing of the carbon-based raw material) may be performed by dry pulverizing, wet pulverizing, and/or mixed pulverizing. Dry pulverizing refers to performing pulverizing without adding a separate solvent. Wet pulverizing refers to performing pulverizing after adding a separate solvent. Mixed pulverizing refers to performing dry pulverizing and wet pulverizing together.

By performing pulverizing that satisfies the pulverizing conditions as described in one or more embodiments of the method of the invention, carbon-based fine powder having an average particle diameter of about 10 nm to about 100 nm, about 10 nm to about 80 nm, about 10 nm to about 60 nm, or about 10 nm to about 50 nm is prepared.

A mixed powder is prepared by mixing a lithium metal composite oxide and the carbon-based fine powder (S200). The lithium metal composite oxide may have a small average particle diameter. In one or more embodiments, the average particle diameter of the lithium metal composite oxide may be about 0.5 $\mu$m to about 15 $\mu$m. In one or more embodiments, the average particle diameter of the lithium metal composite oxide may be about 5 $\mu$m to about 14 $\mu$m or about 5 $\mu$m to about 13 $\mu$m.

The lithium metal composite oxide may have a relatively non-spherical particle shape. A non-spherical particle refers to a particle that is relatively non-spherical. For example, non-spherical particles may include oval particles, flat particles, and particles with one or more protrusions.

The lithium metal composite oxide may be in the form of single particles. A single particle may refer to a single particle that does not have a grain boundary inside. A single particle may refer to a single particle, a monolithic structure, a single-body structure, or a non-agglomerated particle in which particles exist as an independent phase without being mutually agglomerated in a morphological phase. For example, the single particle may be a single crystal. In one or more embodiments, the single particle may be a particle containing several crystals. The single particle may be in a form that is separated alone. Otherwise, the single particle may be in a form in which about 2 to about 100 single particles are attached to each other.

If (e.g., when) the particles of the positive electrode active material are small and/or non-spherical and/or in the form of single particles, the particles may relatively easily agglomerate or break during the positive electrode manufacturing process. Accordingly, a problem of reducing flowability may occur. Therefore, if (e.g., when) the method for preparing the positive electrode active material according to the present disclosure is applied in the case where the particles of the lithium metal composite oxide are small and/or non-spherical and/or in the form of single particles, the effect of improving or enhancing flowability may be more significant.

In one or more embodiments, the lithium metal composite oxide may include a lithium nickel-based oxide having a layered crystal structure, a lithium cobalt-based oxide having a layered crystal structure (e.g., another layered crystal structure), a lithium iron phosphate-based compound having an olivine crystal structure, or a combination thereof.

The mixed powder may contain the lithium metal composite oxide and the carbon-based fine powder in a weight ratio of about 99:1 to about 99.7:0.3. The mixing may be dry mixing, wet mixing, chemical vapor deposition (CVD), or a combination thereof. Dry mixing refers to a mixing method that does not add a separate solvent. Wet mixing refers to a mixing method that adds a separate solvent. Chemical vapor deposition (CVD) refers to a mixing method that uses plasma and heat.

For example, the mixing may be dry mixing. Wet mixing may not have good or desirable processability because a method of adding a mixed solvent and a method of drying and removing the mixed solvent are additionally included. Dry mixing has the advantage or benefit of being simple in that the mixing may be relatively easily and simply performed because only the lithium metal composite oxide and the carbon-based fine powder are to be added.

Rotation is applied to the mixed powder to form or provide a carbon-based coating layer on the particle surface of the lithium metal composite oxide (S300). The applying of the rotation is performed for about 2 to about 10 minutes. In one or more embodiments, the rotation may be performed for about 5 to about 10 minutes. The rotation speed of the rotation is about 1,000 rpm to about 6,000 rpm. In one or more embodiments, the rotation speed may be about 3,500 rpm to about 4,500 rpm.

If (e.g., when) rotation time conditions and rotation speed ranges are not satisfied, an additional process may be desired or required for smooth coating. The additional process may be applying heat, performing a pretreatment to modify the surface of an active material, and/or introducing a coating promoting material, such as a surfactant. In the case of a lithium metal composite oxide that is weak to heat or causes side reactions with the coating promoting material, the coating may not be performed smoothly. In one or more embodiments, if (e.g., when) the rotation time conditions and rotation speed ranges are satisfied, a carbon-based coating layer is simply formed or provided on the particle surface of the lithium metal composite oxide without a separate additional process. The carbon-based coating layer according to the present disclosure is formed or provided by applying a strong rotational force to cause collision and adsorption of the lithium metal composite oxide and the carbon-based fine powder.

The prepared positive electrode active material has an avalanche energy of about 6 mJ/kg to about 13 mJ/kg or an avalanche energy of about 7 mJ/kg to about 10 mJ/kg. The prepared positive electrode active material has an avalanche angle of about 20° to about 60° or an avalanche angle of about 30° to about 50°. These 'avalanche parameters' are described in more detail below.

The larger the avalanche energy and the avalanche angle are, the worse (or less desirable) the particle flowability may be. If (e.g., when) the avalanche parameters exceed the ranges of the present disclosure, the particle flowability may become excessively high, which may cause separation during powder mixing and may cause layers to form or provide during drying. If (e.g., when) the avalanche parameters are less than the ranges of the present disclosure, agglomeration may occur, which may prevent the electrode from being manufactured properly or suitably. If (e.g., when) the positive electrode active material satisfies the avalanche parameter ranges of the present disclosure, the positive electrode may be manufactured best or most suitably. The degree or occurrence of process-related issues may be minimized. Accordingly, the processability and battery performance may be improved or enhanced.

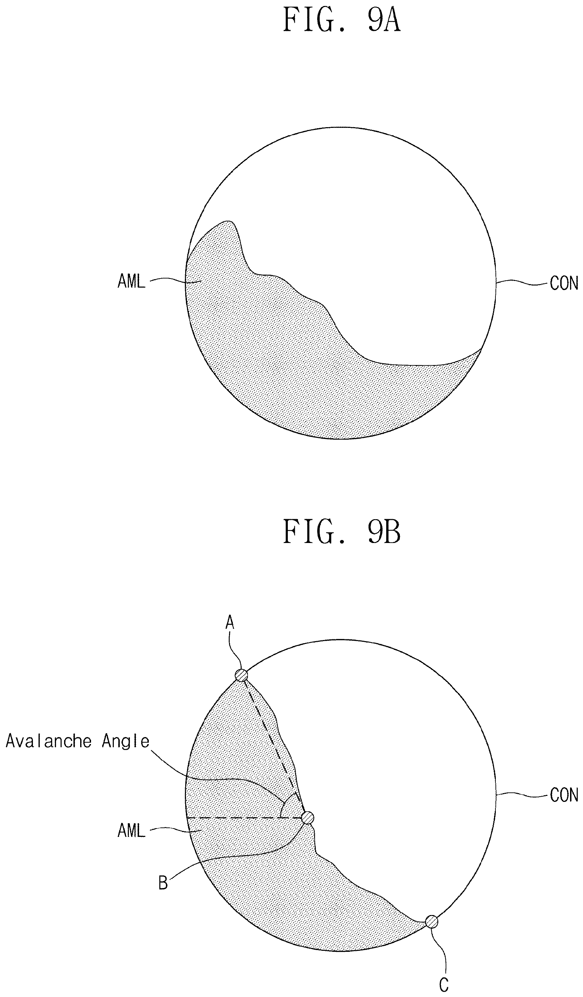

FIGS. 9A to 9C are schematic diagrams illustrating a method of measuring avalanche parameters. The flowability of the prepared positive electrode active material may be evaluated through the avalanche parameters.

Referring to FIG. 9A, the avalanche parameters may be evaluated by putting the prepared positive electrode active material AML into a rotatable and visual recordable container CON. The container CON may be, for example, a cylindrical drum having a camera attached. After having the prepared positive electrode active material AML put into it, the container CON may be rotated at a relatively slow speed of about 10 rpm, and the movement of the positive electrode active material may be recorded with a visual recording device. The shape of the positive electrode active material AML at an initial rotation as illustrated in FIG. 9A may be called a building state.

Referring to FIG. 9B, as rotation is continuously applied to the container CON, the positive electrode active material AML may rise along the wall of the container. As illustrated in FIG. 9B, a state in which the positive electrode active material AML rises to the maximum may be referred to as a peak state.

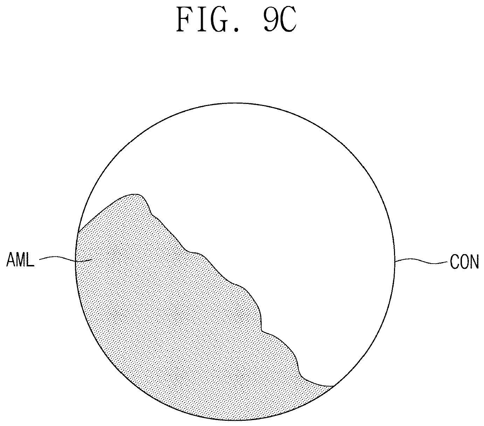

Referring to FIG. 9C, as rotation continues, the positive electrode active material AML in the peak state may collapse in a way that resembles an avalanche. This state may be referred to as a rest state.

Avalanche energy refers to the potential energy per volume (mJ/kg) of the positive electrode active material discharged during transitioning from the peak state to the rest state. This may be obtained by subtracting the "energy per volume of the rest state" from the "energy per volume of the peak state" of the positive electrode active material. The avalanche energy measurement may be repeated three times and the average value may be used.

The "energy per volume of a [x] state", where [x] can be a rest or peak, can be measured by imaging the powder in that state, dividing the image into at least ten pixels, and calculating the potential energy of each pixel according to Equation 1:

## Equation 1

$$\text{Potential Energy} = \text{Mass} \times \text{Height} \times \text{Gravitational Acceleration} \times 1{,}000$$

with units as follows:

- Potential Energy (mJ)
- Mass (kg)
- Height (m)
- Gravitational Acceleration (m/s$^2$): value used was 9.8 m/s$^2$

The avalanche angle refers to the angle of the positive electrode active material at the peak state. The "angle of the positive electrode active material" refers to the angle from the center point (B) of the edge of the positive electrode active material as illustrated in FIG. 9B to the top (A) of the positive electrode active material. The edge refers to the boundary of the positive electrode active material that is not in contact with the container. For example, in FIG. 9B, the edge may be the boundary of the positive electrode active material that extends from point A to point C. The top (A) refers to the highest point among the shapes of the positive electrode active material as shown in the visual data. The avalanche angle measurement may be repeated three times and the average value may be used.

In one embodiment, the method for determining the avalanche angle from a two-dimensional photographic image (such as FIG. 9B) may be as follows. The top point (A) may be identified as the highest point of the positive electrode active material along the vertical axis of the image. A linear regression analysis may be performed along the edge AC, treating the edge as the undulating path between points A and C. A regression line is obtained, and its midpoint may be designated as the center point (B). A straight-line AB may be then drawn between points A and B, and a horizontal reference line may be extended from point B. The avalanche angle may be defined as the angle formed between the straight-line AB and the horizontal reference line from point B.

In one or more embodiments, the avalanche parameters may be measured according to a method as illustrated in US Patent No. 8,335,343 or US Patent No. 8,438,914. In one or more embodiments, the avalanche energy and avalanche angle may be measured using the Revolution Powder Analyzer from Mercury Scientific Inc. However, this is only an example of measuring avalanche parameters, and the measurement method is not limited thereto.

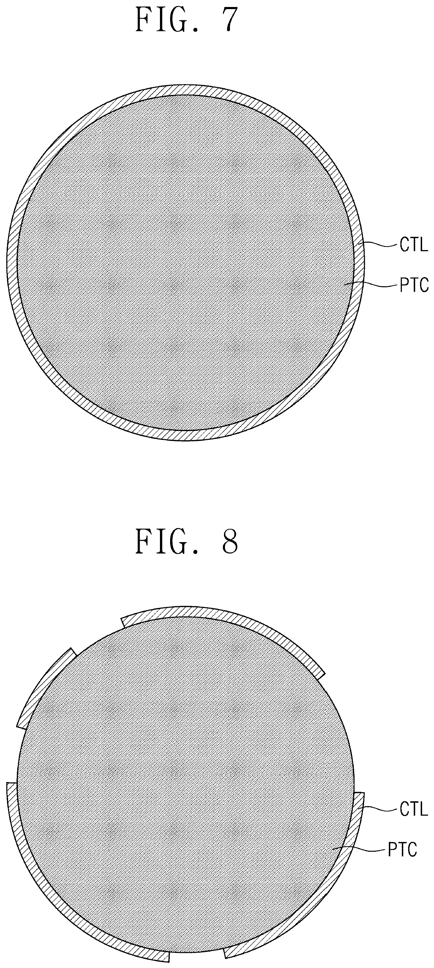

FIG. 7 and FIG. 8 are schematic diagrams illustrating one or more embodiments of a positive electrode active material prepared according to the preparing method of the present disclosure. Referring to FIG. 7, the positive electrode active material prepared according to the preparing method of the present disclosure includes a carbon-based coating layer CTL on the surface of the lithium metal composite oxide particle PTC. The carbon-based coating layer CTL may be formed or provided on the substantially entire surface of the lithium metal composite oxide particle PTC as illustrated in FIG. 7 or may be formed or provided on a portion of the surface of the lithium metal composite oxide particle PTC as illustrated in FIG. 8.

The thickness of the carbon-based coating layer may be about 5 nm to about 10 nm, about 5 mm to about 9 mm, or about 6 mm to about 8 mm. The thickness of the carbon-based coating layer may be an average value of the thickness of the coating layer at 10 randomly selected points. For example, the thickness of the coating layer may be measured at 10 random points in one positive electrode active material, and the average thickness may be calculated to obtain the thickness of the carbon-based coating layer. The particle strength of the positive electrode active material prepared according to the preparing method of the present disclosure may be about 150 MPa to about 250 MPa. For example, the particle strength may be about 160 MPa to about 220 MPa. For example, the particle strength may be about 160 MPa to about 190 MPa. The carbon-based coating layer may impart elasticity to the hard and rigid nature of the positive electrode active material. Accordingly, the flowability of the positive electrode active material may be improved or enhanced. In one or more embodiments, the particle strength of the positive electrode active material may also be enhanced. Accordingly, the problem of particles being broken during a process, such as rolling during the electrode manufacturing process, may be significantly reduced.

The positive electrode active material according to the present disclosure may have excellent or suitable packing density. The packing density may be about 3.7 g/cc to about 4.0 g/cc, about 3.8 g/cc to about 4.0 g/cc, or about 3.9 g/cc to about 4.0 g/cc. The improvement or enhancement in packing density may result from enhanced flowability of the positive electrode active material. If (e.g., when) the particles of the positive electrode active material are too small, empty space between the particles may increase, which may lower the packing density. If (e.g., when) the particles are non-spherical, the packing density may be low because the particles are difficult to adhere to each other. The method for preparing the positive electrode active material according to the present disclosure may be particularly remarkable in terms of the packing density improvement or enhancement effect because the flowability improvement or enhancement effect is excellent or suitable if (e.g., when) applied in the case where the particles are small and/or non-spherical.

The term "packing density" may refer to the mass per unit volume (g/cc) of the cathode active material powder compressed under a constant pressure. For example, it may be measured in accordance with ASTM B527.

The flowability problems and/or the particle breakage problems may occur frequently in dry electrodes. Therefore, the positive electrode active material according to the preparing method of the present disclosure may be excellent or suitable if (e.g., when) applied to a dry electrode. In a dry electrode, if (e.g., when) the flowability of the positive electrode active material is not good or suitable, agglomeration may occur, which may cause the electrode not to be manufactured properly or suitably. If (e.g., when) the flowability is too good, separation may occur during powder mixing, and layers may be formed or provided during drying. Therefore, it may be important to maintain an optimal or suitable flowability range. In one or more embodiments, because the method for preparing the positive electrode active material according to the present disclosure may be performed as a dry process from the method of preparing carbon-based fine powder to the method of manufacturing the positive electrode, the processability may be excellent or suitable if (e.g., when) a dry process is applied.

Hereinafter, Examples and Comparative Examples of the present disclosure will be described. However, the Examples are only illustrations of the present disclosure, and embodiments of the present disclosure are not limited to the Examples herein.

### Example 1

### Preparation of Carbon-Based Fine Powder

10 g of graphite as a carbon-based raw material was put in a ball mill. The ball size was about 2 mm. The mixing volume ratio of the carbon-based raw material to the balls was about 2:1. After about 10 minutes of rotation at about 5,000 rpm, a 5-minute rest period was allowed. The rotation was repeated a total of six times (a total of 60 minutes of rotation). The resultant carbon-based fine powder had an average particle size of about 10 nm.

### Preparation of Positive Electrode Active Material

$LiNi_{0.91}Co_{0.06}Al_{0.03}O_2$ was prepared as a lithium metal composite oxide. The lithium metal composite oxide and the carbon-based fine powder were mixed at a weight ratio of about 99.7:0.3. Rotation was applied at about 4,000 rpm for about 5 minutes using a Nobilta mixer. The resultant positive electrode active material included a carbon-based coating layer on the surface thereof. The average particle diameter of the lithium metal composite oxide was about 13 $\mu$m. The thickness of the carbon-based coating layer was about 7 nm.

### Example 2

A positive electrode active material was prepared in substantially the same manner as in Example 1, except that the mixing weight ratio of the lithium metal composite oxide to the carbon-based fine powder and the mixing time of the Nobilta mixer were changed. The changed conditions are described in Table 1.

### Comparative Example 1

The carbon-based fine powder and the lithium metal composite oxide of Example 1 were mixed. Simple mixing was performed without rotation using a Nobilta mixer.

### Comparative Example 2

A positive electrode active material was prepared in substantially the same manner as in Example 1, except that the rotation speed (rpm) of the Nobilta mixer and mixing time were changed. The changed conditions are described in Table 1.

**Evaluation Example 1: Flowability Evaluation**

The powders of the Examples and Comparative Examples were analyzed using a dynamic powder flowability analyzer (the Revolution Powder Analyzer) from Mercury Scientific Inc.

The larger the avalanche energy, the avalanche angle, and the cohesion-T are, the worse (or less desirable) the particle flowability may be. In one or more embodiments, if (e.g., when) the avalanche energy, the avalanche angle, and the cohesion-T are too small, the particle flowability may be too good (or too high) and the processability may not be good or suitable. Therefore, it is desired or necessary to prepare the powders so as to have values within appropriate or suitable ranges.

The unit of "cohesion-T" may be Pascals or mJ/kg. "Cohesion-T", i.e. cohesion thickness, is the shear force at the interface between the powder that moves upward with the sample drum as it rotates and the powder that flows downward beneath the outer surface of the powder. This shear force may be calculated using the thickness parameter. Using this factor, the volume, mass, and average normal pressure of the sample powder within the thickness of the non-flowing surface can be calculated. The shear force of the non-flowing surface can be calculated by multiplying the normal pressure by the sine of the angle of the powder bed. For example, cohesion-T can be measured by powder analyzer, such as the Revolution Powder Analyzer from Mercury Scientific Inc.

**Evaluation Example 2: Particle Strength Evaluation**

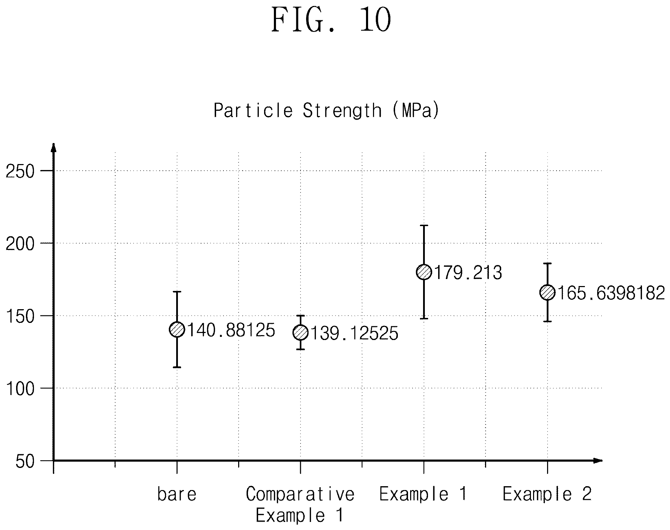

The particle strength of the positive electrode active material was measured for the active materials of the Examples and Comparative Examples. Using a particle strength measuring device (such the Micro Compression Testing Machine MCT-W500-E of Shimadzu Corp.), the positive electrode active material particles were placed on an optical microscope glass, and the particle strength was measured by applying a pressure to the sample with a probe. In this case, the average value of five or more positive electrode active material particles was determined as the particle strength. The results are shown in FIG. 10. The 'bare' result shown was evaluated with only the lithium metal composite oxide of Example 1, i.e. without a carbon-based coating layer having been formed or provided on the particle surface of the lithium metal composite oxide particles.

**Manufacture of Battery**

The positive electrode active materials of the Examples and Comparative Examples were mixed with a conductive (e.g., electrically conductive) material and a binder. In order to allow sufficient or suitable fiberization of the binder, the mixture was additionally mixed at about 25 °C at a speed of about 4,500 rpm for about 22 minutes. No separate solvent was used in the process. The mixture was put into an extruder and extruded to prepare a positive electrode sheet. The pressure during extrusion was about 45 MPa. The prepared positive electrode sheet was rolled to prepare a dry positive electrode film. The dry positive electrode film was placed on one side of an aluminium thin film having a thickness of about 12 $\mu$m to manufacture a positive electrode.

Using the positive electrode manufactured, a coin cell was manufactured using a lithium metal as a counter electrode, a PTFE separator, and a solution containing 1.3 M $LiPF_6$ dissolved in ethylene carbonate (EC), ethyl methyl carbonate (EMC), and dimethyl carbonate (DMC) (about 3:4:3 volume ratio, relatively) as an electrolyte.

**Evaluation Example 3: Cycle Evaluation**

The manufactured batteries were subjected to cycle evaluation. In the first cycle, the batteries were charged and discharged (cc mode) in a voltage range of about 4.35-2.8 V (vs Li) with a current capacity of about 0.1 C, and then charged (cc mode) to about 4.35 V (vs Li) with a current capacity of about 0.33 C in the second cycle. After that, the batteries were cut-off at a current of about 0.05 C rate while maintaining about 4.35 V in the constant voltage mode (cv mode) and discharged to about 2.8 V (vs Li) with a current capacity of about 0.2 C. In order to evaluate the cycle lifespan, the batteries were charged with a constant current until the voltage reached about 4.35 V at a current rate of about 1 C, and discharged with a constant current of about 1 C until the voltage reached about 2.8 V, and then charged and discharged up to 50 times under the conditions of charging with a constant current of about 1 C until the voltage reached about 2.8 V. The results are shown in Table 1 below.

**Table 1**

| | Example 1 | Example 2 | Comparative Example 1 | Comparative Example 2 |
|---|---|---|---|---|
| Lithium metal composite oxide:carbon-based coating layer | 99.7:0.3 | 99:1 | - | 99.7:0.3 |
| Nobilta mixing rpm (rpm) | 4,000 | 4,000 | - | 500 |
| Nobilta mixing time (min) | 5 | 10 | - | 20 |
| Avalanche energy (mJ/kg) | 9.5 | 8 | 14.5 | 14 |
| Avalanche angle (degree) | 40 | 35 | 73 | 71 |
| Cohesion-T | 50 | 40 | 103 | 100 |
| Packing density (g/cc) | 4.0 | 4.0 | 3.7 | 3.7 |
| Average diameter of lithium metal composite oxide ($\mu$m) | 13 | 13 | 13 | 13 |
| Carbon-based coating layer thickness (nm) | 5 | 5 | 0 | 3 |
| Capacity retention (%) | 95 | 95 | 88 | 90 |

Referring to Table 1 and FIG. 10, it can be confirmed that the positive electrode active materials of Examples 1 and 2 have superior or more suitable flowability than that of the Comparative Example. As a result, it can be confirmed that the capacity retention of the rechargeable lithium batteries according to Examples 1 and 2 is also superior to that of the Comparative Example.

The positive electrode active material according to one or more embodiments of the present disclosure may have improved or enhanced flowability.

Through the method for preparing a positive electrode active material according to one or more embodiments of the present disclosure, a positive electrode active material having optimal or suitable flowability may be prepared more easily and simply.

Although one or more embodiments of the present disclosure have been described, it should be understood that the present disclosure should not be limited to these embodiments but one or more changes and modifications can be made by one ordinary skilled in the art within the scope of the present disclosure as hereinafter claimed and equivalents thereof.

**Claims**

1.  A method for preparing a positive electrode active material, the method comprising:

    pulverizing a carbon-based raw material to prepare carbon-based fine powder;
    mixing a lithium metal composite oxide and the carbon-based fine powder to prepare a mixed powder; and
    applying rotation to the mixed powder to provide a carbon-based coating layer on a particle surface of the lithium metal composite oxide,
    wherein an average particle diameter of the carbon-based fine powder is about 10 nm to about 100 nm, and the applying of the rotation comprises applying rotation of about 1,000 rpm to about 6,000 rpm for about 2 minutes to about 10 minutes.

2.  The method for preparing a positive electrode active material as claimed in claim 1, wherein the pulverizing of the carbon-based raw material comprises:

    putting the carbon-based raw material into a pulverizer comprising balls; and
    operating the pulverizer for about 60 minutes,
    wherein a mixing volume ratio of the carbon-based raw material to the balls in a container of the pulverizer is about 2:1 to about 5:1,
    a particle diameter of the balls is about 1 mm to about 5 mm, and
    a rotation speed at which the pulverizer operates is about 5,000 rpm to about 10,000 rpm.

3. The method for preparing a positive electrode active material as claimed in claim 1 or claim 2,

   wherein the lithium metal composite oxide comprises a lithium nickel-based oxide having a layered crystal structure, a lithium cobalt-based oxide having another layered crystal structure, a lithium iron phosphate-based compound having an olivine crystal structure, or a combination thereof,
   an average particle diameter of the lithium metal composite oxide is about 0.5 $\mu$m to about 15 $\mu$m, and
   particles of the lithium nickel-based oxide are in a form of single particles.

4. The method for preparing a positive electrode active material as claimed in any preceding claim, wherein the mixed powder comprises the lithium metal composite oxide and the carbon-based fine powder in a weight ratio of about 99:1 to about 99.7:0.3.

5. The method for preparing a positive electrode active material as claimed in any preceding claim, wherein the mixing comprises dry mixing.

6. The method for preparing a positive electrode active material as claimed in any preceding claim, wherein a rotation speed of the applying of the rotation is about 3,500 rpm to about 4,500 rpm.

7. The method for preparing a positive electrode active material as claimed in any preceding claim, wherein the prepared positive electrode active material has an avalanche energy of about 6 mJ/kg to about 13 mJ/kg, and/or wherein the prepared positive electrode active material has an avalanche angle of about 20° to about 60°.

8. The method for preparing a positive electrode active material as claimed in any preceding claim, wherein a thickness of the carbon-based coating layer is about 5 nm to about 10 nm.

9. The method for preparing a positive electrode active material as claimed in any preceding claim, wherein a particle strength of the positive electrode active material is about 150 MPa to about 250 MPa.

10. A positive electrode active material comprising a lithium metal composite oxide and a carbon-based coating layer on a surface of the lithium metal composite oxide,

    wherein an avalanche energy of the positive electrode active material is about 6 mJ/kg to about 13 mJ/kg,
    an avalanche angle of the positive electrode active material is about 20° to about 60°, and
    an average particle diameter of the positive electrode active material is about 0.5 $\mu$m to about 15 $\mu$m.

11. The positive electrode active material as claimed in claim 10,
    wherein the carbon-based coating layer comprises carbon-based fine powder having an average particle diameter of the carbon-based fine powder is about 10 nm to about 100 nm.

12. The positive electrode active material as claimed in claim 10 or claim 11,

    wherein the lithium metal composite oxide comprises a lithium nickel-based oxide having a layered crystal structure, a lithium cobalt-based oxide having another layered crystal structure, a lithium iron phosphate-based compound having an olivine crystal structure, or a combination thereof, and
    particles of the lithium nickel-based oxide are in a form of single particles

13. The positive electrode active material as claimed in any one of claims 10 to 12, wherein a packing density of the positive electrode active material is about 3.7 g/cc to about 4.0 g/cc.

14. The positive electrode active material as claimed in any one of claims 10 to 13, wherein a thickness of the carbon-based coating layer is about 5 nm to about 10 nm.

15. A rechargeable lithium battery comprising:

    a positive electrode comprising the positive electrode active material as claimed in any one of claims 10 to 14;
    a negative electrode comprising a negative electrode active material; and
    a separator interposed between the negative electrode and the positive electrode.

# FIG. 1

ELL

COL1 AML1      30      COL2 AML2

10                  20

Li$^+$

# FIG. 2

# FIG. 3

EP 4 726 795 A1

# FIG. 4

# FIG. 5

# FIG. 6

```
        ┌─────────┐
        │  Start  │
        └────┬────┘
             │
             ▼
┌──────────────────────────────────────┐
│   Prepare carbon-based fine powder    │────S100
└──────────────────┬───────────────────┘
                   │
                   ▼
┌──────────────────────────────────────┐
│          Prepare mixed powder         │────S200
└──────────────────┬───────────────────┘
                   │
                   ▼
┌──────────────────────────────────────┐
│             Apply rotation            │────S300
└──────────────────┬───────────────────┘
                   │
                   ▼
            ┌─────────┐
            │   End   │
            └─────────┘
```

# FIG. 7

CTL

PTC

# FIG. 8

CTL

PTC

# FIG. 9A

AML —        — CON

# FIG. 9B

A

Avalanche Angle

AML —

B

CON

C

# FIG. 9C

AML

CON

# FIG. 10

Particle Strength (MPa)

Europäisches
Patentamt

European
Patent Office

Office européen
des brevets

**EUROPEAN SEARCH REPORT**

**Application Number**

EP 25 20 6962

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 116 845 195 A (BEIJING EASPRING MAT TECH CO LTD ET AL.) 3 October 2023 (2023-10-03) * the whole document * | 10,12, 14,15 | INV. H01M4/04 H01M4/131 H01M4/36 H01M4/525 |
| X | US 2024/213455 A1 (JO SUNGNIM [KR] ET AL) 27 June 2024 (2024-06-27) | 1-5,7-15 | H01M4/58 H01M4/62 |
| A | * paragraph [0227] * * paragraph [0216] * * paragraph [0223] - paragraph [0224] * * claim 16 * * paragraphs [0007], [0012], [0089]; figure 1 * | 6 | H01M10/0525 |
| A | EP 4 254 566 A1 (BEIJING IAMETAL NEW ENERGY TECH CO LTD [CN]) 4 October 2023 (2023-10-04) | 1-15 | |
| A | MANOJ GERA ET AL: "Mechanical Methods for Dry Particle Coating Processes and Their Applications in Drug Delivery and Development", RECENT PATENTS ON DRUG DELIVERY & FORMULATION, vol. 4, no. 1, 1 January 2010 (2010-01-01) , pages 58-81, XP055059149, DOI: 10.2174/187221110789957200 * the whole document * | 1-15 | |

-----

-----

-----

-/--

**TECHNICAL FIELDS SEARCHED (IPC)**

H01M

The present search report has been drawn up for all claims

| Place of search | Date of completion of the search | Examiner |
|---|---|---|
| Munich | 18 February 2026 | Tylus, Urszula |

EPO FORM 1503 03.82 (P04C01)

page 1 of 2

Europäisches
Patentamt

European
Patent Office

Office européen
des brevets

# EUROPEAN SEARCH REPORT

**Application Number**

EP 25 20 6962

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CHÁVEZ MONTES B E ET AL: "A surface characterization platform approach to study Flowability of food powders", POWDER TECHNOLOGY, ELSEVIER, BASEL (CH), vol. 357, 28 August 2019 (2019-08-28), pages 269-280, XP085945666, ISSN: 0032-5910, DOI: 10.1016/J.POWTEC.2019.08.072 [retrieved on 2019-08-28] * the whole document * ----- | 1-15 | |
| A | HOU YANBEI ET AL: "3D printing of bio-inspired porous polymeric solar steam generators for efficient and sustainable desalination", APPLIED PHYSICS REVIEWS, AMERICAN INSTITUTE OF PHYSICS, 2 HUNTINGTON QUADRANGLE, MELVILLE, NY 11747, vol. 11, no. 3, 23 July 2024 (2024-07-23), XP012287186, DOI: 10.1063/5.0200505 [retrieved on 2024-07-23] * the whole document * ----- | 1-15 | |

| | TECHNICAL FIELDS SEARCHED (IPC) |
|---|---|

The present search report has been drawn up for all claims

| Place of search | Date of completion of the search | Examiner |
|---|---|---|
| Munich | 18 February 2026 | Tylus, Urszula |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

......................................................................................

& : member of the same patent family, corresponding document

EPO FORM 1503 03.82 (P04C01)

**page 2 of 2**

## ANNEX TO THE EUROPEAN SEARCH REPORT
## ON EUROPEAN PATENT APPLICATION NO.

EP 25 20 6962

This annex lists the patent family members relating to the patent documents cited in the above-mentioned European search report.
The members are as contained in the European Patent Office EDP file on
The European Patent Office is in no way liable for these particulars which are merely given for the purpose of information.

18-02-2026

| Patent document cited in search report | | Publication date | Patent family member(s) | | Publication date |
|---|---|---|---|---|---|
| CN 116845195 | A | 03-10-2023 | NONE | | |
| US 2024213455 | A1 | 27-06-2024 | CN | 120345079 A | 18-07-2025 |
| | | | EP | 4386888 A1 | 19-06-2024 |
| | | | JP | 2025540957 A | 17-12-2025 |
| | | | KR | 20240092338 A | 24-06-2024 |
| | | | US | 2024213455 A1 | 27-06-2024 |
| | | | WO | 2024128775 A1 | 20-06-2024 |
| EP 4254566 | A1 | 04-10-2023 | CN | 114220977 A | 22-03-2022 |
| | | | EP | 4254566 A1 | 04-10-2023 |
| | | | JP | 7562838 B2 | 07-10-2024 |
| | | | JP | 2024515911 A | 11-04-2024 |
| | | | KR | 20230126701 A | 30-08-2023 |
| | | | US | 2024258521 A1 | 01-08-2024 |
| | | | WO | 2023155365 A1 | 24-08-2023 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8335343 B

- US 8438914 B